# EUROPEAN PATENT APPLICATION

(11) **EP 3 375 585 A1**
(43) Date of publication of application: **19.09.2018**
(21) Application number: 18161360.5
(22) Date of filing: 13.03.2018
(51) Int. Cl.: B29C 39/00, B29C 45/14, F21V 8/00, G02F 1/1333

(54) **A FLAT-SHAPED LIGHT DEVICE WITH A SINGLE-MOLDED SECURING UNIT AND METHOD THEREOF**

(30) Priority: 14.03.2017 CA 2960629
(71) Applicant: Ross, Lukas, Laval, Quebec H7R 4M6 (CA); Marinoni, Mario, Laval, Quebec H1B 1B3 (CA)
(72) Inventor: Ross, Lukas, Laval, Quebec H7R 4M6 (CA); Marinoni, Mario, Laval, Quebec H1B 1B3 (CA)
(74) Representative: Budzinski, Slawomir

(57) **Abstract**

The disclosed invention provides a flat-shaped lightning device where all the components of the lighting unit are embedded in a single-mold, one-piece securing unit made out of a solid matrix. The lighting unit comprises a diffusing panel, a light guiding panel, a light source, a diffusing sheet and may also comprise a gasket and one or more circuit board. All of the parts, in particular, frames, plates, gaskets, that usually constitute the securing unit are replaced with a single-piece solid matrix obtained through a single operation. The lighting device is totally watertight, no parts can be loosened. The invention also provides a method for manufacturing the preferred embodiment of the invention.

## Description

### TECHNICAL FIELD

The present invention relates to illumination apparatuses provided with light guiding plates and light-emitting elements, display apparatuses, and electronic devises provided with such display apparatuses.

### BACKGROUND OF THE INVENTION

The usage of panel-shaped LED (Light-Emitting Diodes) lamps is widely spread. Such lamps are mainly employed as ceiling-mounted lighting systems and, in some cases, as back lighting panel for advertisement purposes. In the latter case a single panel-shaped LED lamps is placed in a vertical position and a vinyl poster, with prints, is glued on the light emitting side. The whole apparatus is often mounted on a wall. None of those LED lamps are suitable for an outdoor use.

The basic components of panel-shaped LED lamps are a lighting unit comprised of a LGP (Light Guiding Panel) sandwiched between a diffusion panel and a reflective sheet, LEDs disposed on a linear-shaped circuit board, positioned on one or more sides of the light guiding panel emitting light towards the side of the light guiding panel and a securing unit comprised of a frame body, a back plate and, in some cases, specially adapted gaskets or shock-absorbing components.

Likewise, a backlight module comprised of light guiding panel flanked by LEDs is also a critical component of the LCD (Liquid Crystal Display) where the backlight module provides a uniform light to the LCD panel. The securing unit usually comprises a frame and a back plate or a lower receiving container where sidewalls serve as a frame. An array of existing attaching and holding solutions, usually within the frame structure, allow the LEDs and, if required, a circuit board to be properly held together in order to make the whole system work. Specially adapted gaskets and shock-absorbing devices are often part of the securing unit.

For example, U.S. Patent No 7_688_398 discloses a backlight assembly, comprising: securing unit, comprising a frame body; a back plate, positioned at an opposite side of the frame body; a top plate; disposed on the back plate; and a plurality of holding strips, provided at periphery inner sides of the securing unit, wherein the holding strips have a U-shaped cross-section, and the U-shaped cross-section of the holding strip defines receiving of the holding strips; and a lighting unit, positioned between the frame body and the back plate of the securing unit, the lighting unit comprising: a reflective sheet, disposed on the top plate of the securing unit; a plurality of LED units, for emitting a light, wherein the light emitted from the LED units is adapted to be reflected by the reflective sheet; and a light guide plate, disposed on the reflective sheet for transmitting light emitted from the LED units and reflected by the reflective sheet, wherein edges of the reflective sheet, the circuit board and the light guide plate of the lighting unit are received and held in the receiving recesses of the holding strips of the securing unit, such that the reflective sheet, the circuit board, and the light guide plate, of the lighting unit are secured between the frame body and the back plate of the securing unit. In this case, the inventor adds an elastic gasket interposed between the lamp cover and the lower receiving container preventing a lamp assembly from being loosened.

A similar design is also disclosed in U.S. Patent No 7_611_274 where, in addition, the strips holding the securing unit together comprise a heat dissipating strip disposed on one side of the circuit board.

However, there are serval problems associated with the current designs.

First, the securing unit is made out of numerous parts held together by various holding solutions, mostly based on complex frame designs, rendering the manufacturing process complicated since all the parts must be carefully designed and manufactured in a way they all perfectly fit together on the assembly line.

Second, it is difficult to make a watertight or waterproof apparatus and thus current panel-shaped LED lamps and LCDs are unsuitable for an outdoor usage.

As for the panel-shaped LED lamps, when two of more of such LED lamps are put side-by-side, a viewer suffers the observation of an opaque line between the panels. The line is the result of the opacity and the thickness of the materials that make the frame of the embodiment.

Some inventions focus on parts-loosening problems of the lighting unit components while other invention aim to solve problems caused by impacts. For instance, U.S. Patent No. 7 688 398 discloses a gasket incorporated between the lamp cover and the lower receiving container. The invention aims to cope with the problems caused by an external shock applied to a LCD apparatus. U.S. Published Patent Application 2006/0044839 deals with the spacial relation between the lamp unit and the LGP in relation to the thickness of the apparatus and the effects of an impact applied to one of those two components. The inventors propose a "lamp holder" within the unit.

As for outdoor advertisement purposes, a system commonly found is a panel-shaped box. The front face is made out of white semi-transparent plastic-type material. Different types of LED lamps are disposed, inside the box, on the opposite side with their light beam pointing towards the front panel, thus back-illuminating the front panel where an advertisement print is positioned. These apparatuses are much thicker when compared to light diffusing panels equipped with light guiding panels that allow the light emitted by LEDs bars disposed on the side-ends of the LGP to be channeled towards the diffusing panel.

The present invention solves the foresaid problems by molding, around all components composing the lighting unit, a single-molded-piece solid matrix. The matrix effectively replaces the current-design securing units. The invention also discloses a method.

The embodiments and practical applications of the invention being disclosed hereinafter are numerous. Indeed, the disclosed invention renders obsolete most, if not all, existing frame-based securing units being employed in back-lighting devices associated with LED lighting technologies as well as LCD technologies while providing those inventions with characteristics such as water tightness, shock-resistance and a production method.

Furthermore, the disclosed method proposes a cost-efficient alternative to all water-tight lighting systems that can be found on vehicles or scattered across the urban landscape. In fact, water tightness of today's lighting systems is obtained by using interlocked components, gaskets or screws or any combination of those.

### SUMMARY OF THE INVENTION

One aspect of the invention provides a lighting unit embedded within a solid matrix made out of liquid material wherein the solid matrix is bonded to the lighting unit either chemically or by means of a groove carved in the edge of one or several components.

In the end, the securing unit made of several frame-like parts, back plates, chassis, receiving containers, etc. is replaced by a securing unit made out of a single-piece solid matrix where all components of the lighting unit are perfectly aligned and tightly held together, thus eliminating the need for various holding solutions.

The resulting apparatus is totally waterproof and watertight. Making the end-products suitable for outdoor usage.

In fact, the whole apparatus can be totally water-submerged while conserving its functionality and integrity.

Furthermore, if the securing unit herein disclosed is molded from a transparent or light-diffusing white color solid matrix and two or more panel-shaped LED lighting devices, equipped with the disclosed securing unit, are set in a side-by-side configuration, the opaque line between the panels is substantially reduced. This makes the invention suitable for advertisement purposes when several panels are being employed to form one single backlighted-billboard.

Another aspect of the invention provides a process of producing a lighting panel-shaped LED lighting unit or a LCD apparatus, which comprises the following steps:
(i) Providing a mold big enough to fit all the lighting unit components;
(ii) Placing all components of the lighting unit inside the mold, wherein all components are placed in such way so the light emitted by the light-emitting diodes is channelled, through the LGP, towards the diffusing part and wherein the light-emitting diodes are encapsulated with a encapsulant;
(iii) Preventing the liquid material to seep between the components;
(iv) Filling the mold with a liquid material so that all parts are immersed in the liquid material; and
(v) Solidifying the liquid material into a solid matrix so all the component are embedded in the solid matrix.

The mold and the components can be arranged is a way that the diffusing side of the LED lamp or LCD can be left outside (by molding the matrix around it) or totally immerged. In the latter case, the material shall be totally or partially transparent.

The above features and advantages and other features and advantages of the present invention are readily apparent from the following detailed description of the best modes for carrying out the in invention when taken in connection with the drawings.

### BRIEF DESCRIPTION OF SEVERAL VIEWS OF THE DRAWINGS

It should be understood that the exemplary embodiments of the present invention described below may be modified in many different ways without departing from the inventive principles disclosed herein, and the scope of the present invention is therefore not limited to these particular flowing embodiments. Rather, these embodiments are provided so that this disclosure will be thorough and complete, and will fully convey the concept of the invention to those skilled in the art by way of example and not of limitation. All the figures are schematic and generally only show parts which are necessary in order to elucidate the invention for simplicity and clarity of illustration.

Figures and drawings have not been drawn to scale. Devices are shown in simplified form in order to avoid unnecessarily obscuring of the present invention. Other parts may be omitted or merely suggested.
FIG. 1 illustrates a perspective view of a panel-shaped LED panel.
FIG. 2 illustrates an exploded view of the invention and depicts the action of placing the components of a lightning unit into a mold according to one embodiment of the present invention;
FIG. 3 illustrates a cross-sectional view of all components of the lighting unit within the mold;
FIG. 4 illustrates FIG. 3 while it's being filled with a liquid material;
FIG. 5 illustrates a cross-sectional view of the inventions embodiment once the liquid material has cured;
FIG. 6 illustrates an exploded view depicting the action of placing the components of a lightning unit into a mold according to another example of embodiment of the disclosed invention;
FIG. 7 illustrates resulting embodiment of the process illustrated in FIG. 6 and some practical applications;
FIG. 8a depicts a cross-sectional view of a back-to-back configuration of one embodiment while FIG. 8b illustrate an application of a back-to-back configuration.
FIG. 9 displays a cross-section of an embodiment of the invention where the securing unit extends beyond the diffusing panel and where all parts and all sides are embedded in the solid matrix;
FIG. 10 shows a corss-section of an embodiment of the invention where the diffusing plate was removed and replaced with a solid matrix displaying light-diffusing proprieties.

### DESCRIPTION OF THE PREFERRED EMBODIMENTS

In the following description many explications are set forward with the aim to facilitate the understanding of the invention. However, to one skilled in the art, many of those details would be obvious.

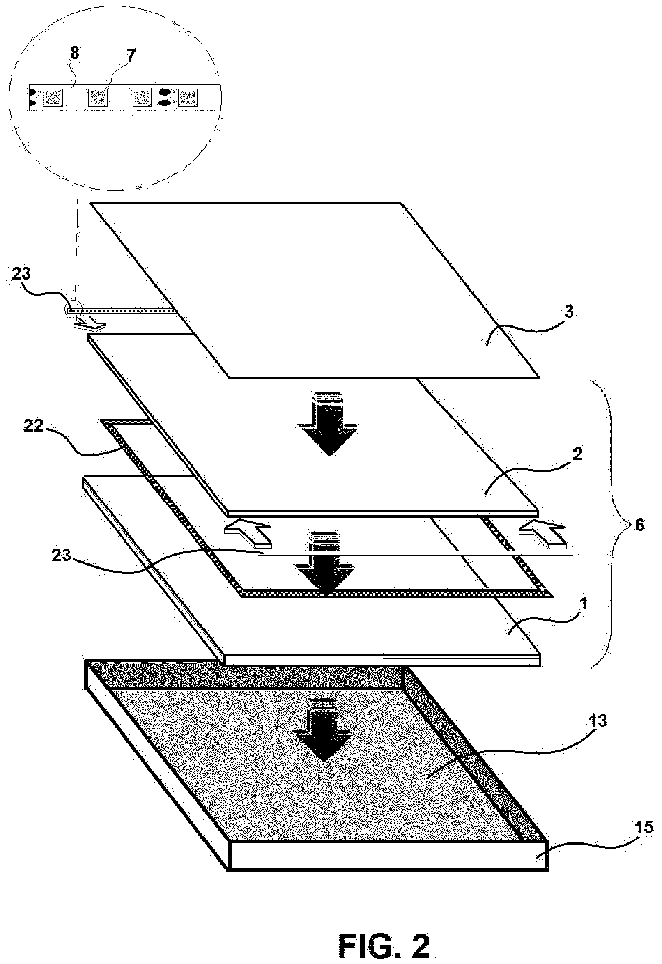

With reference to FIG. 2, the lighting unit 6 comprises: the diffusing panel 1, made out of a white, light-diffusing acrylic material. A linear U-shaped groove 12 is carved within the side-end of the diffusing panel 1; The edge of the groove of light-entry side is shorter than the light-exiting side.

The light guiding panel 2 (hereinafter referred as "LGP") that guides the light from the light source towards the light diffusing panel 1; LEDs 16 are mounted and electrically connected on a bar-like or line-like shape circuit board 8 and are covered with an encapsulant 7 that shields the diodes 16 from moisture or dust. The circuit board 8 can be flexible or rigid. Once put together, the circuit board 8, the LED 16 and the encapsulant form a light-emitting bar 23. The light-emitting bar 23 is disposed along a side-end surface of the LGP wherein the light-emitting surface of the light-emitting bar 23 is facing toward the side-end surface 9 of the LGP 2. As known to a skilled person in the art, many additional components (not shown) may be included in the light-emitting bar 23 such as lead frame, bond wire, solder, electrode, pad, contact layer, phosphor layer, and dielectric layer etc. The light-emitting bar 23 is usually supplied in electricity through wires (not shown), copper strips or any other electricity-conductive material; A reflective sheet 3 is positioned adjacent to the LGP on the opposite side of the LGP's light-emitting side.

A diffusing panel 1 is placed inside a pizza-box-shaped mold 13. The light emitting side is oriented towards the bottom portion of the mold. The diffusing panel 1 is contained by the sidewalls 15 extending from the bottom portion of the mold. The inner shape and measurements of the mold, delimited by the sidewalls 15, are identical to those of the light emitting side of diffusing panel 1 in such way there are no spaces left between the side-end of the diffusing panel 1 and the sidewalls 15 of the mold once the diffusing panel 1 is placed inside the mold.

On top of the diffusing panel, a LGP 2 is placed, it's light-emitting side towards the diffusing panel 1. Between the LGP 2 and the diffusing panel 1, a white strip-like gasket 22 is installed on the contour of the light-emitting side of the LGP. The gasket has a width between 1 millimetre and 5 millimetres. The gasket 22 separates the LGP 2 and the diffusing panel 1.

The gasket 22 serves two purposes: It blocks the light emitted by the LEDs directly towards the light diffusing panel 1; It prevents the liquid material 17 to seep in between the diffusing panel 1 and the LGP 2. The gasket 22 is made out of a waterproof material and can also carry a double-side adhesive coating to ensure the diffusing panel 1 and the LGP 2 are sealed together.

Similar effects were obtained using an adhesive tape (not shown) applied on the side-end of the LGP 2 while overlapping a five millimetre edge on the contour of the LGP (between the LGP 2 and the diffusing panel 1). The adhesive tape was also used to hold the light-emitting bars 23.

Two light-emitting bars 23 are placed, on opposite sides, along a side-end surface of the LGP wherein the light-emitting surface is facing toward the side-end surface 9. A transparent adhesive coating can be applied on the outer face of the encapsulant 7 so the light-emitting bar 23 is glued to the LGP's side.

The light-emitting diodes 16 may comprise a semiconductor material selected from GaAs, GaP, GaAlAs, GaAsP, AlGaInP, GaN, InN, AlN, InGaN, InGaAIN, ZnSe, BAlGaN, BN, and SiC, In an exemplary embodiment, the materials of the LED dice are InGaN, InGaP and AlGaInP. For example, a light-emitting strip having LED dice made of InGaN, InGaP and AlGaInP may be commercially obtained from Shenzhen Refond Optoelectronic Co. (Guangdong, China, with Model # RF-W3SA50TS-A40).

A reflective sheet 3 is placed on the LGP 2. An adhesive coating can also be applied on the LGP 2 or the reflective sheet 3 or both in order to firmly maintain the reflecting sheet 3 into place and preventing any liquid material from seeping in between the LGP 2 and the reflective sheet 3.

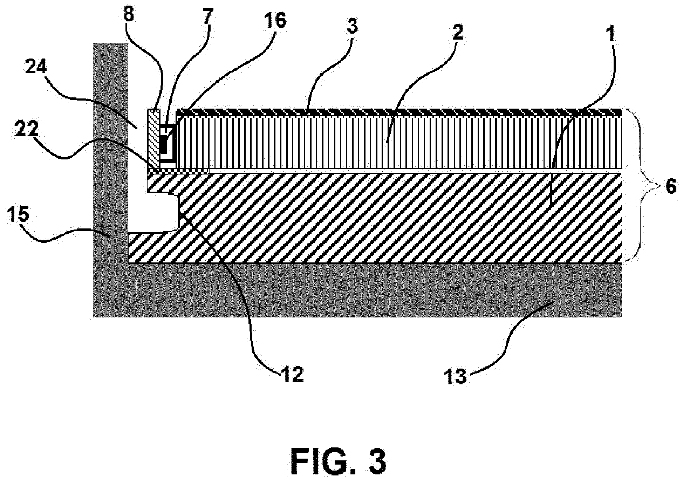

FIG. 3 shows a cross-sectional view of the mold once all component of the lighting unit 6 have been placed into the mold. An empty space 24 is formed. There is no securing unit. Different methods can be employed to hold the component all together. Adhesive coating can be applied on the light-emitting side of the encapsulant 7, on both sides of the gasket 22 and between the LGP 2 and the reflective sheet 3. However tests have revealed that other techniques (not shown) allow to properly maintain all components of the lighting unit 6 in place inside the mold while preventing any liquid material to seep between the parts, for instance, one such technique consists of introducing tiny transparent plastic pieces between the sidewalls 15 of the mold and the other components (maintaining the light-emitting bars 23 firmly into place) and by pressing downwards all components so the pressure between the components is higher that the pressure of the liquid material 17, thus preventing the liquid material 17 into seeping between the components.

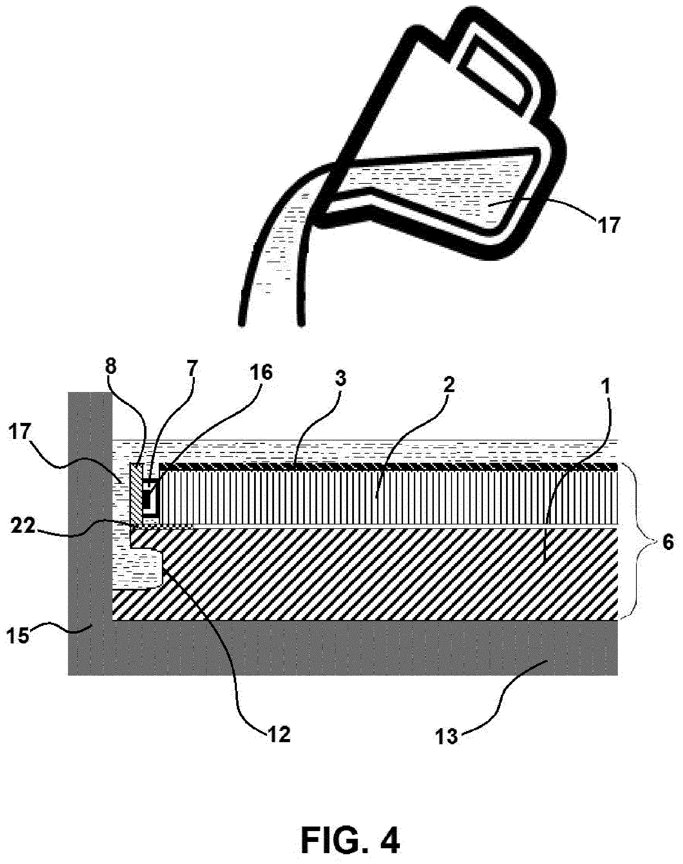

With reference to FIG. 4. the mold is filled with liquid material 17, mixed with a solidifying agent, until all components are immersed with the liquid material 17.

The liquid material may be selected from the group consisting of silicone resin, polycarbonate resin, phenol formaldehyde resin, epoxy resin, acrylonitrile butadiene styrene (ABS), polyester resin, polyethylene, polypropylene, polystyrene, acrylic resin, polyethylene terephthalate, polyethylene terenaphthalate, polybutylene terephthalate, polyethersulfone, polyetheretherketone, polyimide, polyetherimide, cellulose triacetate resin, polyacrylate resin, polysulfone resin, a fluoride resin, polyvinyl acetate, alkyd resin, polyurethane resin, vinyl chloride resin, polybutyl methacrylate, polymethyl methacrylate (PMMA), parylene, fluorinated polymer, polyphthalamide (PPA), quartz, glass, silica, alumina, and mixture thereof. Examples of epoxy resin include diglycidylether of bisphenol A; diglycidyl ether of bisphenol 1, 4-dimethanol cyelohexyl diglycidyl ether; 1, 4-butanediol diglycidyl ether; or any combination thereof.

The quantity of the liquid material 17 poured into the mold can be adjusted according to the material used and the desired proprieties once the material solidifies. A greater quantity of liquid material 17 will translate into a higher level of liquid material 17 above the lighting unit 6 resulting in a thicker securing unit, thus providing, depending on the material, more rigidity to the invention.

One skilled in the art will choose the material according to the desired proprieties affecting the end-product. For example, one can be keen to use a rigid material where sturdiness is required while a more flexible material will be preferred for its tolerance to vibrations and shock absorbing attributes.

Once the mold has been filled with liquid material 17 and the lighting unit 6 has been immersed as shown in FIG. 4, the preparation is put aside for the necessary laps of time so the liquid material 17 cures into solid matrix 14.

The curing may also be conducted in one or more stages using methods such as thermal, UV, electron beam techniques, or combinations thereof. For example, the formulations may be cured in two stages wherein an initial thermal or UV cure, for example, may be used to produce a partially hardened resin. This material which is easily handled, may then be further cured using, for example, either thermal or UV techniques, to produce a material with the desired thermal performance (for example glass transition temperature (Tg) and coefficient of thermal expansion (CTE)), optical properties and moisture resistance etc.

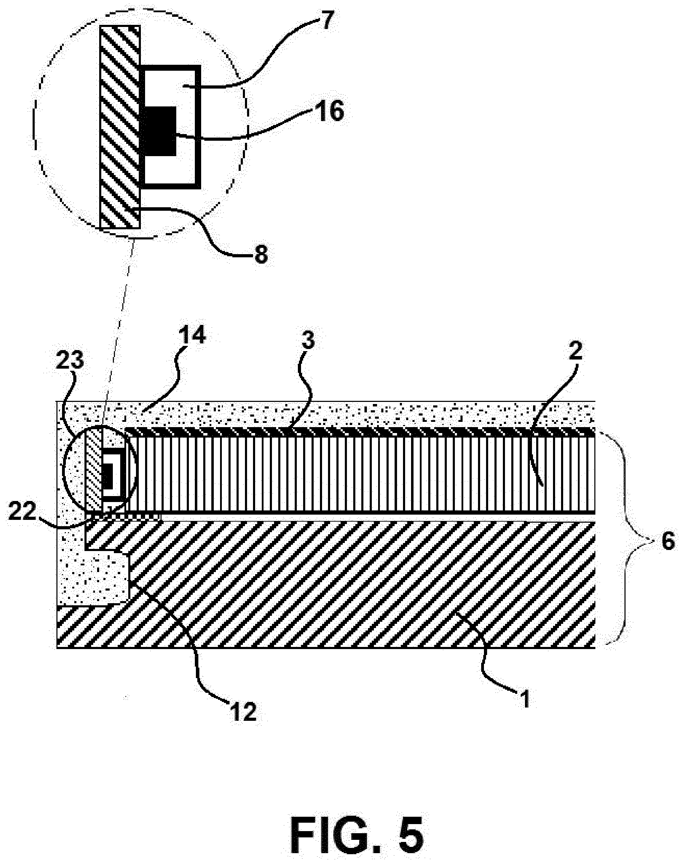

As shown in FIG. 5, once the liquid material 17 is cured, the mold 13 and 15 is removed.

The securing unit is now entirely made out of a single-molded solid matrix 14 displaying the preferred embodiment of the disclosed invention.

It should be appreciated that the solid matrix 14 may be made from any suitable resin formulations, e.g. two-part liquid composition, that are known to a skilled person in the art. Formulating curable compositions with certain components in each of two parts has been necessary in some instances, for example to provide desirable storage stability. Sometimes, the two parts of the compositions need to be mixed in different ratios for different applications. A first part of the two-part compositions may include the polymerizable monomer/oligomer, while the second includes curing agents such as polymerization initiator. Other components if present, such as stabilizers, accelerators etc. are assigned to either the first or second part as appropriate and as will be apparent to the person skilled in the art. Due to the necessity to mix the components of two-part curable compositions each component is usually a liquid. Typically the two-parts of the composition are held in separate chambers of a packaging. The packaging may have a mechanism to dispense the components which also mixes the components in the desired ratio on dispensing. Such packaging is well known and includes for example dispensing syringes and the like. For ease of reference, a first part of the composition (usually the part containing the polymerizable monomer or oligomer) may be referred to as "part A" while the second part, normally containing the cure system may be referred to as "part B".

For example, when epoxy resin is used to make the solid matrix 14, the first part of the two-part composition may comprise 1-chloro-2,3-epoxypropane (epichlorohydrin) and the second part of the two-part composition may comprise a co-reactant having poly functional groups. The co-reactant may comprise two or more groups independently of each other selected from amine, acid, acid anhydride, phenol, alcohols, thiol, and any combination thereof. Examples of the co-reactant include, but are not limited to, p-amino phenol, glyoxal tetraphenol, bisphenol compounds such as 2,2-bis(4-hydroxyphenyl)propane (bisphenol A) and bis(hydroxyphenyl)methane (bisphenol F), and any mixture thereof. For example, bisphenol-A diglycidyl ether epoxy resin may be made from solidifying a liquid mixture of epichlorohydrin and bisphenol A.

Condensation polymers such as phenol-aldehyde resins may also be used to make the solid matrix 14. Any phenol-aldehyde resin that can be prepared from a phenol compound and an aldehyde under either an acid condition or a basic condition can be used herein. In some embodiments, the phenol compound has formula (I): ##STR00001## wherein each of Ra, Rb, Rc, Rd and Re of the phenol compound of formula (I) is independently hydrogen; hydroxy; halide such as fluoride, chloride, bromide and iodide; nitro; benzo; carboxy; alkoxycarbonyl; acyl such as formyl, alkylcarbonyl (e.g. acetyl) and arylcabonyl benzoyl); alkyl such as methyl, ethyl, propyl, butyl, pentyl, hexyl, heptyl, octyl, nonyl, decyl, and the like; aryl such as phenyl and naphthyl; aralkyl such as benzyl; or alkaryl such as alkylphenyls. In certain embodiments, each of Ra, Rb, Rd and Re of the phenol compound of formula (I) is independently H; and Re is alkyl. In other embodiment, each of Ra, Rb, Re, Rd and Re of the phenol compound of formula (I) is H.

In certain embodiments, the phenol compound has formula (II): ##STR00002## wherein each of Rf, Rg, Rh and Ri is independently hydrogen; hydroxy; halide such as fluoride, chloride, bromide and iodide; nitro; benzo; carboxy; acyl such as formyl, alkylcarbonyl (e.g. acetyl) and arylcarbonyl (e.g., benzoyl); alkyl such as methyl, ethyl, propyl, butyl, pentyl, hexyl, heptyl, octyl, nonyl, decyl, and the like; alkenyl such as unsubstituted or substituted vinyl and allyl; unsubstituted or substituted methacrylate; unsubstituted or substituted acrylate; silyl ether; siloxanyl; aryl such as phenyl and naphthyl; aralkyl such as benzyl; or alkaryl such as alkylphenyls. In some embodiments, each of Rf, Rg, Rh and Ri of the phenol compound of formula (II) is H. In other embodiments, each of Rf, Rh and Ri of the phenol compound of formula (II) is H; and Rg is alkyl.

Examples of the phenol include phenol and an alkylphenol such as m-cresol, p-tort-butylphenol, o-propylphenol, resorcinol, or bisphenol A.

Any aldehyde that reacts with the phenol compounds disclosed herein can be used to prepare the phenol-aldehyde resin. In some embodiments, the aldehyde is represented by formula (III): Rj-CH.dbd.O (III) wherein Rj is H, alkyl, substituted alkyl such as aralkyl, aryl, or substituted aryl such as alkaryl. In certain embodiments, Rj is alkyl. In other embodiments, Rj is C.sub.1-22 alkyl such as methyl, ethyl, propyl, isopropyl, butyl, isobutyl, pentyl, isopentyl, hexyl, octyl, nonyl, decyl, dodecyl, tetradecyl, hexadecyl, octadecyl, benzyl and the like. In some embodiments, Rj is a C.sub.3-22 alkyl group. In certain embodiments, Rj is a C.sub.3 alkyl group. In other embodiments, Rj is H, i.e., the aldehyde is formaldehyde. The term "formaldehyde" also encompasses any substance that can split off or release formaldehyde, such as paraformaldehyde and trioxane.

In some embodiments, the aldehyde is an alkyl aldehyde such as n-butyraldehyde, isobutyraldehyde, valeraldehyde, lauryl aldehyde, palmityl aldehyde, stearyl aldehyde or a combination thereof. In further embodiments, the aldehyde is formaldehyde, an alkyl aldehyde or a combination thereof. When a mixture of aldehydes is used, they can be added to the reaction mixture individually, simultaneously or sequentially.

The phenol-aldehyde resin used for the solid matrix 14 can be prepared by two different methods. The first method utilizes a stoichiometric excess of the phenolic compound (e.g., phenol or resorcinol) over the aldehyde (e.g., formaldehyde) in the presence of an acidic catalyst to form a phenolic novolac or novolak. The novolak generally requires the addition of a methylene donor such as formaldehyde, paraformaldehyde or hexamethylenetetramine (HEXA) to effect curing. The other method utilizes a stoichiometric excess of the aldehyde (e.g., formaldehyde) over the phenolic compound (e.g., phenol or resorcinol) in the presence of a base catalyst to form a phenolic resole. The phenolic resole can be subsequently cured to a thermosetting polymer simply by heating or the addition of an acid catalyst.

FIG. 5, displays a cross-section of the invention once the liquid material 17 has cured into a solid matrix 14.

The securing unit is made of a single-piece securing unit, perfectly adjusted to all components of the lighting unit.

The U-shaped groove 12 carved into the side of the diffusing panel 1 is completely filled with solid matrix 14. This allows a strong binding between the lighting unit 6 and the securing unit. Furthermore, the whole structure is perfectly sealed and displays waterproof characteristics.

Depending on the preferred material, the solid matrix 14 can also be chemically bonded to the surface of the diffusing panel 1 or to the other components of the lighting unit 6.

If the process is well executed, there are no bubbles of air within the disclosed invention and thus all empty spaces are eliminated making the invention suitable for deep underwater applications.

In various embodiments of the invention, diodes 16 can be of the same type or of different types, e.g., being of different size or emitting light of different color or intensity. The LED light may also be operated to provide flashing light of a single color or a series of sequential lights.

The solid matrix 14 can also be made of transparent, semi-transparent or opaque color material according to the intendent end-use of the embodiment.

The encapsulant 7 and the solid matrix 14 may be independently of each other made of a transparent material.

Heat generated by electric components dissipates through the solid matrix 14 itself.

One skilled in the art should bear in mind that the operating temperature of the resulting apparatus may vary according to its components and thus the materials of the solid matrix 14 shall be chosen consequently.

Power supply is essential. Many connecting and wirings options are possible. However, connecting issues will not be discussed hereinafter since the invention focuses mainly on a new type of securing unit. Nevertheless it should be understood that any wires or any other connecting devices (not shown) that supply power to the light-emitting bar 23 are also perfectly sealed at the entry point while running freely throughout the apparatus within the solid matrix 14. It should also be understood that the invention can be powered with battery power supply as well.

If desired, the encapsulant 7, the solid matrix 14 may independently of each other comprise a refractive index modifier to tune their refractive indexes into the desired range. Examples of refractive index modifier include, but are not limited to, titanium oxide, hafnium oxide, aluminum oxide, gallium oxide, indium oxide, yttrium oxide, zirconium oxide, cerium oxide, zinc oxide, magnesium oxide, calcium oxide, lead oxide, zinc selenide, zinc sulphide, gallium nitride, silicon nitride, aluminum nitride, or alloys of two or more metals of Groups II, III, IV, V, and VI such as alloys made from Zn, Se, S, and

Automated production of such LED strip lamps can be achieved using the process as described above. The process is simple and easy to be implemented.

### Example 1

### Square-shaped LED lighting unit

The diffusing panel 1, the light guiding panel 2, the reflective sheet 3 and the light-emitting bars were purchased from Lumin Group International Limited (Shenzhen, China). A U-shaped groove 12 is carved in the lateral side of the diffusing plate 1 in a manner that the edge of the groove of light-entry side is shorter than the edge of the groove of light-exiting side, thus allowing the liquid material 17 to properly fill up the groove 12 while leaving the light-existing side of the diffusing plate 1 exposed.

The gasket 22 was obtained by cutting a square-like form, identical in size to the LGP 6 but with the center part cut off leaving a linear contour of five millimetre in width, from a double-sided self-adhesive material purchased in a local office-supplies store.

All parts were placed according to the disclosure illustrated in FIG. 2 inside a mold made out of plywood with melamine finishing and the inner sidewalls were coated with a Mothers® Carnauba car wax. The aim for the use of the wax is to avoid a chemical bond between the sidewalls 15 of the mold and the solid matrix 14. An array of different industrial-use compounds exist on the market. Each of those compounds is usually designed to prevent chemical bond between the resin and the mold according to chemical composition of the solid matrix 14 on one side and the material used for the mold (13 and 15) on the other side.

The ligh-emitting bars 23 were glued to the LGP using Krazy® glue.

Once all components are in place, the mold was filled with liquid material 17 until all of the components of the lightning unit 6 are immersed and the total level of liquid material 17 is five millimetre above the reflective sheet 3.

Different liquid materials have been experimented. The materials were colorless and transparent.

One material employed was a Polyester Casting Resin manufactured by Environmental technology inc. (Field Landing, CA, United States). The material was mixed with a solidifying agent in proportions according to the manufacturer's specifications. The material and the solidifying agent were stirred for about sixty seconds and poured into the mold as shown on FIG. 4 so all components were immersed and the total level of liquid material 17 was five millimetre above the reflective sheet 3.

Another material employed during testing was a liquid polyaspartic agent mixed with a solidifying agent in a 2:1 proportion. Both were purchased from Epoxy Metropolitain (Montréal, Canada).

In both cases, the preparation was placed in an ambient indoor environment for solidification. The solidification time was twenty four hours.

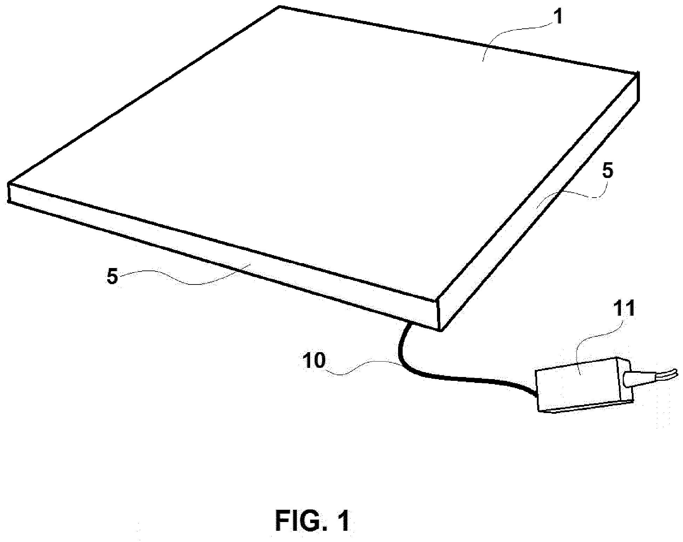

After twenty four hours, the apparatus was unmolded and the end-embodiment resembles a panel-shaped LED Lamp illustrated in FIG. 1.

When the LED panel is mounted on a ceiling, the diffusing panel 1 points toward the floor, illuminating the area under the panel. Although FIG. 1 shows a square shape, embodiments of the invention can take many shapes: rectangular, circular, or even in forms of letters or pictograms. Also shown in FIG. 1 is an electrical cord 10 and a transformer 11.

When compared to existing technologies, the invention offers numerous advantages, particularly due to its watertight attributes. The invention can be used as back-lighted road sign, an advertisement panel, or any lighting device intended for outdoor usage. Due to the absence of empty spaces within the apparatus, the disclosed invention is suitable for deep-underwater usage (not tested).

### Example 2

### Circle-shaped LED panel

The diffusing panel 1, the light guiding panel 2, the reflective sheet 3 were purchased from Lumin Group International Limited (Shenzhen, China).

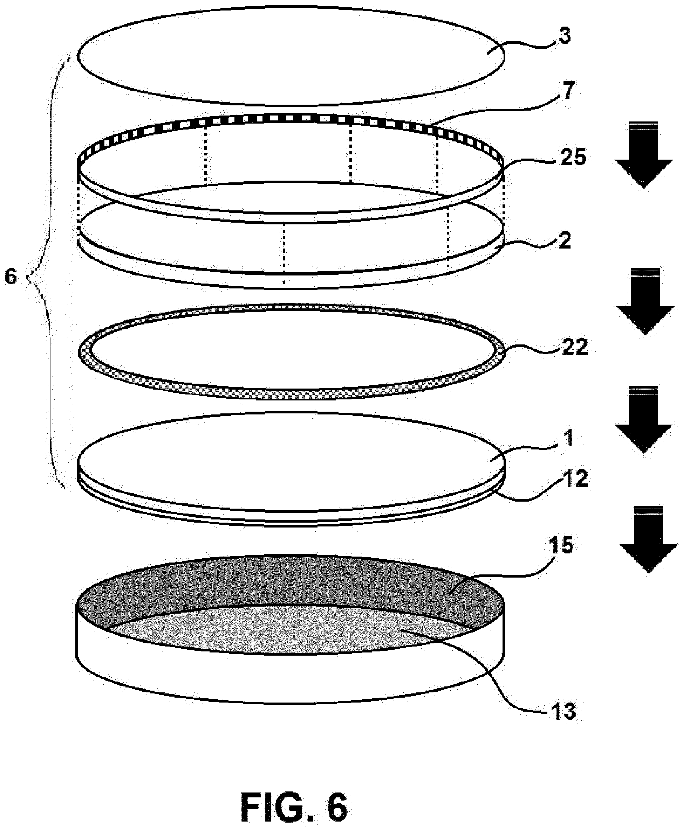

With reference to FIG. 6, using a Computer Numerical Control (hereinafter "CNC) router, all three components were cut in a manner to obtain a circle-shaped components (diffusing panel 1, the light guiding panel 2, the reflective sheet 3) wherein the circle-shaped LGP 2 is slightly smaller in diameter than the circle-shaped diffusing panel 1 in a manner that LEDs fixed on a flexible circuit board 25 can be accommodated around the lateral side of the LGP and the combined diameter of the LGP and the LEDs (fixed on the flexible circuit board) is identical to the light-entering side of the diffusing panel 1. The flexible circuit board 25 is configured so the light beam of the LEDs enters inside the LGP through the side-end surface of the LGP 2.

The gasket 22 was obtained by cutting a circle-like form, identical in size to the LGP 6 but with the center part cut off leaving a linear contour of five millimetre in width, from a double-sided self-adhesive material purchased in a local office-supplies store.

With reference to FIG. 3, a U-shaped groove 12 was routed in the lateral side of the diffusing plate 1 in a manner that the edge of the groove of light-entry side is shorter than the that the edge of the groove of the light-exiting side, thus allowing the liquid material 17 to properly fill up the groove 12 while leaving the light-existing side of the diffusing plate 1 totally exposed.

With reference to FIG. 6, the lighting unit components 6 were all placed into a mold (13 and 15) where the sidewalls 13 of the mold accommodate the light-exiting side of the diffusing panel and no space was left in between. An adhesive material is applied on both sides of the gasket 22, between the LGP 2 and the reflective sheet 3 and on the LEDs encapsulant light-emitting side 7 in order to hold together all components during the molding procedure.

Once all components are in place, the mold was filled with liquid material 17 until all of the components of the lightning unit 6 are immersed and the total level of liquid material 17 is five millimetre above the reflective sheet 3.

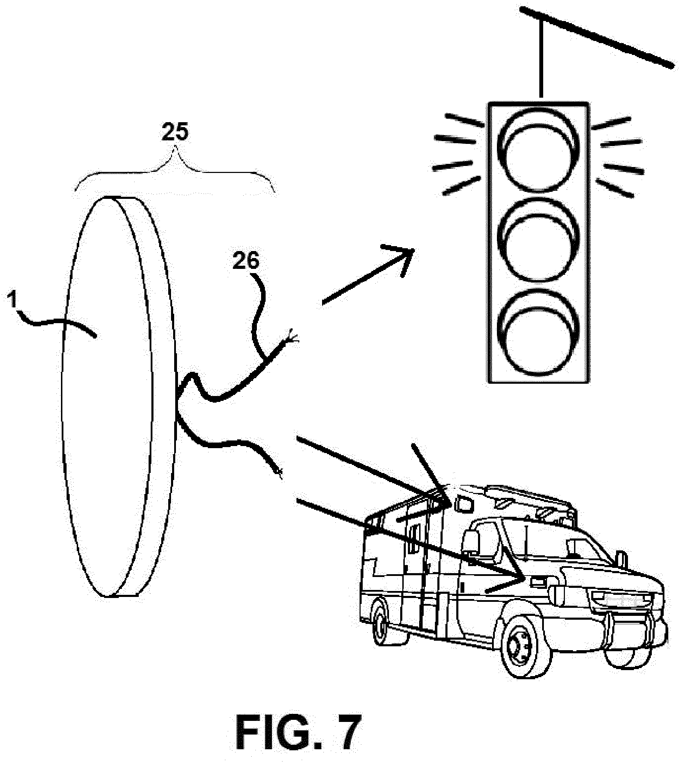

With reference to FIG. 7, the resulting embodiment 25 is a flat, disc-shaped LED panel comprising a lighting unit 6 embedded into a single-mold solid matrix 14 with the diffusing panel 1 on one side, its sides and back side made out a single-piece solid matrix 14. Two wires are also shown 26.

It is obvious to one skilled in the art that the disclosed process can yield a vast variety of shapes and colors of flat-shaped embodiments of the invention. When the invention is given specific forms and shapes such as illustrated in FIG. 7, various embodiments of the invention can be used as traffic lights or vehicle strobe or regular lighting systems.

### Example 3

### Double-face display device

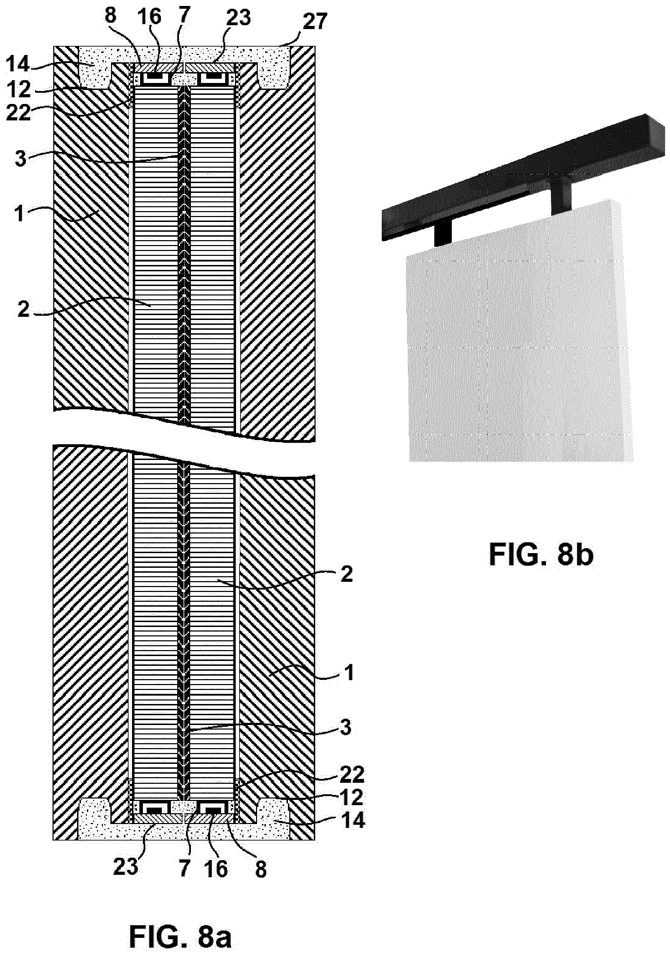

With reference to FIG. 8a, two square-shaped lighting units 6 each comprising a diffusing panel 1, a LGP 2, a square-shaped gasket 22 inserted between the diffusing panel 1 and the LGP 2, light-emitting bars 23 disposed along two opposite side-end surfaces of the LGP that serves as light-entry portion were arranged in a back-to-back configuration.

Test were also conducted (not shown) by disposing the light-emitting bars 23 of each of the two LGP 2 comprised in the back-to-back configuration on opposite side-end surfaces (instead of a side-by-side configuration as shown in FIG. 8a). The end-results were similar.

An adhesive material is applied on both sides of the gasket 22, between the LGP 2 and the reflective sheet 3 and on the LEDs encapsulant 7 light-emitting side in order to hold together all components during the molding procedure.

The double-lighting unit 26 is then placed inside a stand erect mold (not shown). The length of the opening of the mold corresponding to the length of a diffusing plate 1 light-emitting side while the width corresponds to the exact width of both lighting units 6 put in a back to back configuration. The depth of the mold was higher than the length of the outer-side of the diffusing plate 1.

The bottom and the inner-walls of the mold were coated with a non-adhesive product.

Liquid material 17 was poured into the mold until the liquid material was leveled with the top-end 27 of the diffusing panel 1 as shown in FIG. 8a.

The preparation was left in an ambient room environment for a period of twenty four hours for solidification.

The resulting embodiment is a thin two-sided light-diffusing panel. The embodiment is totally waterproof while all components of the lighting unit are perfectly held together by the single-piece solid matrix 14.

Those characteristics make suitable for a back-light unit for advertisement purposes as shown on FIG. 8b. The disclosed invention is much thinner than most two-sided advertisement panels. In fact, existing panels employ a technology based on the principle of several light-diffusing devices that are fixed on the back plate of a box-shaped apparatus while the beam of light points towards the opposite side and thus back-lights the diffusing panel on the opposite side of the back plate.

Unlike the disclosed invention, existing products require a greater deal of skilled labour to be produced. The apparatuses designed for an outdoor usage that are made out of light-diffusing devices, welded frame parts (forming a box) and precisely cut acrylic plates.

It should be understood that a vinyl print is applied on the light-emitting sides in order to display a message, a drawing (e.g. a logo) or a combination of both.

Another noticeable effect created by a securing unit made out of a colorless or light-diffusing solid matrix 14 is the attenuation of opaque lines formed when two panels are put in a side-by-side configuration. Such effect makes the invention suitable advertisement purposes where a back-lighted billboard is created by disposing several flat-shaped LED panels (comprising linear-shaped sides) in a side-by-side configuration.

The disclosed invention can integrate a variety of mounting solution wherein one part of a two-part connecting mounting solution is disposed on the back side of the apparatus prior to the step where the liquid material 17 is poured wherein the one connecting part points outwards in such way that the connecting part counterpart can be connected once the material solidifies into solid matrix 14. The desired mounting component is perfectly positioned and its base is embedded into the solid matrix 14 and can be connected to its connecting counterpart (installed on a wall or a mounting solution) and thus mounting the disclosed invention on a ceiling, a wall, a vehicle, etc. For instance, such mounting solutions such as connectors, plugs, magnets, or any interlocking devices. The apparatus can incorporate either a male or female part and, if desired, conduct electricity.

The disclosed manufacturing process also offers numerous advantages compared to techniques employed in the related field. Indeed, present-day securing units require, in many cases, large amount of parts and components. Each of those parts and components requires design and testing. The disclosed technique allows to craft a securing unit perfectly adapted in size and shape to the all of the other components inside the apparatus.

The production costs are thus greatly reduced as well as defects resulting from known production methods where all the parts of the securing unit must be carefully interlocked and assembled.

The mold (13 and 15) can be crafted from an array of materials subject to technical considerations regarding the chemical bonding between the mold (13 and 15) and the solid matrix 14. Such considerations can be overcome by one skilled in the art using an appropriate coating that corresponds to the material of the solid matrix 14 being used in order to prevent chemical bonding between the solid matrix 14 and the mold's sidewalls 15.

Once skilled in the art can adapt the disclosed process by replacing the step of pouring the liquid material 17 with injection molding.

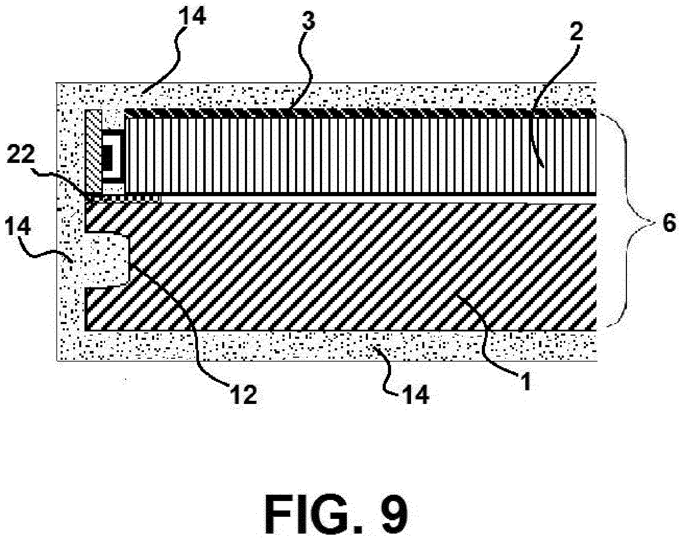

With reference to FIG. 9, the molding technique can be adapted by one skilled in the art so the solid matrix 14 extends beyond the diffusing panel 1 in a manner that no sides are left in contact with the outer environment. In other words, the whole lighting unit 6, including the light-emitting side of the diffusing panel 1, is "wrapped up" within a solid matrix 14. In this case, the solid matrix 14 will most likely be made out of colorless material in order to let the beam of light to spread towards the desired object or the desired direction.

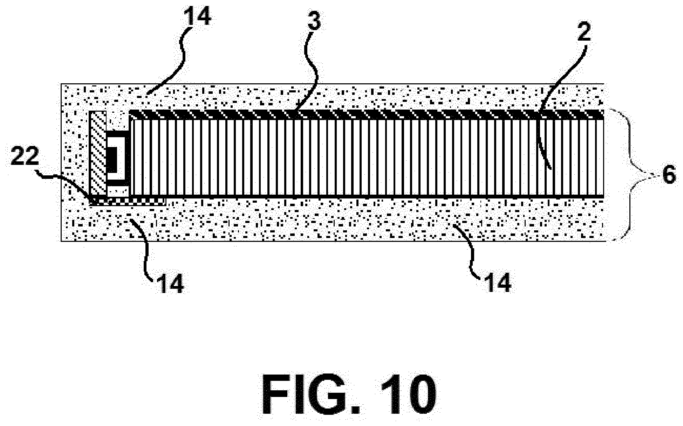

Furthermore, with reference to FIG. 10, one skilled in the art could totally supress the diffusing panel 1 and simply mold the remaining components composing the lightning unit 6: diffusing sheet 3, LGP 2, gasket 22 and light-emitting bars 23 into one single-mold piece. The material (or a combination of materials) chosen for the solid matrix 14 will display light-diffusing proprieties similar to those of the diffusing panel 1. In other words, the diffusing panel 1 is effectively replaced with part of the securing unit.

Since liquid crystal display (LCD) panel itself does not emit light and uses a backlight assembly that provides the LCD with light, most of the devices using LCD technology are paired with LGP 2, LED bars 23, reflective sheets 3 and sometimes light diffusing components, the disclosed invention offers a cost-effective alternative manufacturing method while providing all LCD products with substantial advantages, most prevailing, water-tightness, shock resistance and the total absence of any loosened parts within the apparatus.

## Claims

1. A flat-shaped light device comprising: a lightning unit and a securing unit wherein the lighting unit is comprised of a reflective sheet; a light guiding panel that guides light from the light source that is incident on a side surface and emits the light from a front light-emitting side; one or more light-emitting elements disposed along a side-end surface of the light guiding panel that serves as a light-entry portion, each of the plurality of light-emitting elements having a light-emitting surface facing toward the side-end surface; a light diffusing panel disposed on the light-emitting side of the light guiding panel that diffuses the incident light from the light guiding panel to the front surface side of the diffusing panel **characterized in that** all components of the lighting unit are embedded within a securing unit made of single-mold solid matrix;

2. The flat-shaped light device according to claim 1, wherein the diffusing panel has a U-shaped groove carved within it's side-end section.

3. The flat-shaped light device according to claim 1 wherein one or more mounting devices are molded-in on the opposite side of the front surface side and wherein the mounting devices are disposed and configured to allow the flat-shaped light device to be mounted on a supporting device.

4. The flat-shaped light device according to claim 1, wherein the solid matrix comprises a material selected from the group consisting of silicone resin, polycarbonate resin, phenol formaldehyde resin, epoxy resin, acrylonitrile butadiene styrene (ABS), polyester resin, polyethylene, polypropylene, polystyrene, acrylic resin, polyethylene terephthalate, polyethylene terenaphthalate, polybutylene terephthalate, polyethersulfone, polyetheretherketone, polyimide, polyetherimide, cellulose triacetate resin, polyacrylate resin, polysulfone resin, a fluoride resin, polyvinyl acetate, alkyd resin, polyurethane resin, vinyl chloride resin, polybutyl methacrylate, polymethyl methacrylate (PMMA), parylene, fluorinated polymer, polyphthalamide (PPA), quartz, glass, silica, alumina, and mixture thereof.

5. The flat-shaped light device according to claim 1, wherein the solid matrix comprises epoxy resin or phenol formaldehyde resin.

6. The flat-shaped light device according to claim 1, wherein the diffusing panel comprises a material selected from the group consisting of polycarbonate resin, acrylonitrile butadiene styrene (ABS), polymethylmethacrylate (PMMA), acrylic resin, polyester resin, a silicone resin, polypropylene resin, glass, silica, and alumina.

7. A flat-shaped light device comprising: a lightning unit and a securing unit wherein the lighting unit is comprised of a reflective sheet; a light guiding panel that guides light from the light source that is incident on a side surface side and emits the light from a front light-emitting side; one or more light-emitting elements disposed along a side-end surface of the light guiding panel that serves as a light-entry portion, each of the plurality of light-emitting elements having a light-emitting surface facing toward the side-end surface; **characterized in that** it also comprises a liquid crystal display panel disposed on the light-emitting side of the light guiding panel that diffuses the incident light from the light guiding panel to the front surface side of the diffusing panel wherein all components of the lighting unit are embedded within a securing unit made of single-mold solid matrix.

8. The flat-shaped light device according to claim 7 wherein one or more mounting devices are molded-in on the opposite side of the front surface side and wherein the mounting devices are disposed and configured to allow the flat-shaped light device to be mounted on a supporting device.

9. The flat-shaped light device according to claim 7, wherein the solid matrix comprises a material selected from the group consisting of silicone resin, polycarbonate resin, phenol formaldehyde resin, epoxy resin, acrylonitrile butadiene styrene (ABS), polyester resin, polyethylene, polypropylene, polystyrene, acrylic resin, polyethylene terephthalate, polyethylene terenaphthalate, polybutylene terephthalate, polyethersulfone, polyetheretherketone, polyimide, polyetherimide, cellulose triacetate resin, polyacrylate resin, polysulfone resin, a fluoride resin, polyvinyl acetate, alkyd resin, polyurethane resin, vinyl chloride resin, polybutyl methacrylate, polymethyl methacrylate (PMMA), parylene, fluorinated polymer, polyphthalamide (PPA), quartz, glass, silica, alumina, and mixture thereof.

10. The flat-shaped light device according to claim 7, wherein the diffusing panel comprises a material selected from the group consisting of polycarbonate resin, acrylonitrile butadiene styrene (ABS), polymethylmethacrylate (PMMA), acrylic resin, polyester resin, a silicone resin, polypropylene resin, glass, silica, and alumina.

11. A method for manufacturing a lighting device comprising
providing a lighting unit comprised of a diffusing panel or a liquid crystal display panel or both; a light guiding panel; one or more light-emitting elements disposed along a side-end surface of the light guiding panel that serves as a light-entry portion, each of the plurality of light-emitting elements having a light-emitting surface facing toward the side-end surface of the light guiding panel; a reflective sheet;
**characterized in that** it also comprises the following steps:
- placing all the components of the lighting unit into a mold;
- filling the mold with a liquid material so all components of the lighting unit are immersed in the liquid material;
- solidifying the liquid material into a solid matrix so all the component are embedded in the solid matrix.

12. The process of claim 17 wherein the liquid material is mixed with a solidifying agent.

13. The process of claim 17 wherein injection molding is employed.
